# EUROPEAN PATENT APPLICATION

(11) **EP 4 604 306 A1**
(43) Date of publication of application: **20.08.2025**
(21) Application number: 24214575.3
(22) Date of filing: 21.11.2024
(51) Int. Cl.: H01M 50/533, H01M 50/536, H01M 10/0525, H01M 10/0587

(54) **ELECTRODE TAB AND SECONDARY BATTERY INCLUDING THE SAME**

(30) Priority: 16.02.2024 KR 20240022526
(71) Applicant: SAMSUNG SDI CO., LTD., Yongin-si, Gyeonggi-do 17084 (KR)
(72) Inventor: CHO, Sung Min, 16678 Suwon-si (KR)
(74) Representative: Marks & Clerk LLP

(57) **Abstract**

An electrode tab (30) includes a first tab body (310), a second tab body (320) facing the first tab body, a connection member (330) between the first tab body and the second tab body, and a buffer member (340) in at least one of the first tab body or the second tab body.

## Description

### BACKGROUND

### 1. Field

Embodiments of the present disclosure relate to an electrode tab and a secondary battery including the same.

### 2. Description of the Related Art

In general, due to the recent proliferation of electronic devices using batteries, such as mobile phones, notebook computers, and electric vehicles, the demand for secondary batteries having relatively high energy density and relatively high capacity has rapidly increased. Accordingly, research and development for improving the performance of a lithium secondary battery (e.g., rechargeable lithium batteries) are being actively conducted.

A lithium secondary battery can be a battery including a positive electrode and a negative electrode including an active material capable of intercalating and deintercalating lithium ions, and an electrolyte solution, and may generate energy through oxidation/reduction reactions when lithium ions are intercalated/deintercalated at the positive and negative electrodes.

The above-described information disclosed in the technology that forms the Background is only intended to improve understanding of the background, and thus may include information that does not constitute the prior art.

### SUMMARY

Aspects of one or more embodiments of the present disclosure are directed toward providing an electrode tab capable of preventing or reducing damage to an electrode assembly and a secondary battery including the same.

Additional aspects will be set forth in part in the description which follows and, in part, will be apparent from the description, or may be learned by practice of the presented embodiments of the disclosure.

According to one or more embodiments of the present disclosure, an electrode tab includes a first tab body, a second tab body facing the first tab body, a connection member between the first tab body and the second tab body, and a buffer member in at least one of the first tab body and/or the second tab body.

In one or more embodiments, the first tab body and the second tab body may be rotatably connected about the connection member.

In one or more embodiments, the first tab body may include a first center part, a first inner end part extending from one side of the first center part and connected to the connection member, and a first outer end part extending from the other side of the first center part and spaced and/or apart (*e.g.,* spaced apart or separated) from the first inner end part, and the second tab body may include a second center part, a second inner end part extending from one side of the second center part and connected to the connection member, and a second outer end part extending from the other side of the second center part and spaced and/or apart (*e.g.,* spaced apart or separated) from the second inner end part.

In one or more embodiments, a cross-sectional area of the first tab body may decrease from the first center part toward the first outer end part, and a cross-sectional area of the second tab body may decrease from the second center part toward the second outer end part.

In one or more embodiments, a surface of each of the first outer end part and the second outer end part may have a curved shape.

In one or more embodiments, the cross-sectional area of the first tab body may decrease from the first center part toward the first inner end part, and the cross-sectional area of the second tab body may decrease from the second center part toward the second inner end part.

In one or more embodiments, a cross-sectional shape of each of the first tab body and the second tab body may be a circular shape or an elliptical shape.

In one or more embodiments, the connection member may extend in (along) a longitudinal direction of (each of) the first tab body and the second tab body.

In one or more embodiments, the connection member may include a plurality of connection beads arranged in the longitudinal direction of (each of) the first tab body and the second tab body.

In one or more embodiments, the buffer member may include a first chamber inside the first tab body, and a second chamber inside the second tab body.

In one or more embodiments, the first chamber and the second chamber may be separated from each other.

In one or more embodiments, cross-sectional shapes of the first chamber and the second chamber may be the same as cross-sectional shapes of the first tab body and the second tab body, respectively.

In one or more embodiments, the first chamber and the second chamber may extend in (along) longitudinal directions of the first tab body and the second tab body, respectively.

In one or more embodiments, the first chamber and the second chamber may pass through the first tab body and the second tab body, respectively.

In one or more embodiments, the electrode tab may further include a third tab body between the first tab body and the second tab body, and the connection member may include a first connection member between the first tab body and the third tab body, and a second connection member between the second tab body and the third tab body.

In one or more embodiments, the buffer member may include a first chamber inside the first tab body, a second chamber inside the second tab body, and a third chamber inside the third tab body.

In one or more embodiments, the third tab body may be provided as a plurality of third tab bodies, and the connection member may further include one or more third connection members between the third tab bodies adjacent to each other.

According to one or more embodiments of the present disclosure, a secondary battery includes a case, an electrode assembly in which an electrode plate and a separator are alternately stacked, the electrode assembly being inside the case, and an electrode tab connected to the electrode plate, wherein the electrode tab may include a first tab body, a second tab body facing the first tab body, a connection member between the first tab body and the second tab body, and a buffer member in at least one of the first tab body and the second tab body.

In one or more embodiments, the electrode assembly may be wound around a winding axis, and a longitudinal direction of each of the first tab body and the second tab body may be parallel (*e.g.,* substantially parallel) to the winding axis.

In one or more embodiments, the connection member may be fixed to the electrode plate, and the first tab body and the second tab body may be separated from the electrode plate.

In one or more embodiments, the term "rotatably" may encompass a bending or flexing of tabs relative to a connection member.

The first and second tab members may define respective inner chambers, which chambers may be empty or filled with a buffer material.

In one or more embodiments, the first tab body, the second tab body and the connection member are of a substantially continuous conductive material.

In one or more embodiments, the electrode tab may be configured for placement within an electrode assembly such that the electrode tab extends in a direction parallel to a winding axis of the electrode assembly, the electrode tab having a substantially uniform cross-section along its coaxial extent. The electrode tab may comprise a connection part projecting from the electrode assembly for electrically connecting to a battery terminal.

At least some of the above and other features of the invention are set out in the claims.

### BRIEF DESCRIPTION OF THE DRAWINGS

The drawings attached to this specification illustrate certain embodiments of the present disclosure, and further describe aspects and features of the present disclosure together with the detailed description of the present disclosure. However, the present disclosure should not be construed as being limited to the drawings. In the drawings:
FIG. 1 is a perspective view schematically illustrating a configuration of a secondary battery according to one or more embodiments of the present disclosure;
FIG. 2 is a front cross-sectional view schematically illustrating a configuration of the secondary battery of FIG. 1, according to one or more embodiments of the present disclosure;
FIG. 3 is a plan cross-sectional view schematically illustrating a configuration of an electrode assembly of the secondary battery of FIG. 1, according to one or more embodiments of the present disclosure;
FIG. 4 is an enlarged cross-sectional view schematically illustrating an installation state of an electrode tab according to one or more embodiments of the present disclosure;
FIG. 5 is a perspective view schematically illustrating a configuration of the electrode tab according to one or more embodiments of the present disclosure;
FIG. 6 is a cross-sectional view schematically illustrating a configuration of the electrode tab according to one or more embodiments of the present disclosure;
FIGS. 7 and 8 are each a schematic view illustrating a manufacturing process of the secondary battery according to one or more embodiments of the present disclosure;
FIGS. 9 and 10 are each a cross-sectional view schematically illustrating an operation of the secondary battery according to one or more embodiments of the present disclosure;
FIG. 11 is a perspective view schematically illustrating a configuration of an electrode tab according to one or more embodiments of the present disclosure;
FIG. 12 is a plan view schematically illustrating a configuration of the electrode tab of FIG. 11, according to one or more embodiments of the present disclosure;
FIG. 13 is a perspective view schematically illustrating a configuration of an electrode tab according to one or more embodiments of the present disclosure;
FIG. 14 is a cross-sectional view schematically illustrating a configuration of the electrode tab of FIG. 13, according to one or more embodiments of the present disclosure;
FIG. 15 is a perspective view schematically illustrating a configuration of an electrode tab according to one or more embodiments of the present disclosure;
FIG. 16 is a plan view schematically illustrating a configuration of the electrode tab of FIG. 15, according to one or more embodiments of the present disclosure;
FIG. 17 is a perspective view schematically illustrating a configuration of an electrode tab according to one or more embodiments of the present disclosure;
FIG. 18 is a cross-sectional view schematically illustrating a configuration of the electrode tab of FIG. 17, according to one or more embodiments of the present disclosure;
FIG. 19 is a perspective view schematically illustrating a configuration of an electrode tab according to one or more embodiments of the present disclosure; and
FIG. 20 is a plan view schematically illustrating a configuration of the electrode tab of Fig. 19, according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Herein, one or more embodiments of the present disclosure will be described, in further detail, with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

The embodiments described in this specification and the configurations shown in the drawings are provided as some example embodiments of the present disclosure and do not represent all of the technical ideas, aspects, and features of the present disclosure. Accordingly, it is to be understood that there may be one or more suitable equivalents and modifications that may replace or modify the embodiments described herein.

It is to be understood that when an element, such as an area, layer, film, region or portion, is referred to as being "on," "connected to," or "coupled to" another element or layer, it may be directly on, connected, or coupled to the other element or one or more intervening elements may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. In addition, it will also be understood that when an element is referred to as being "between" two elements, it can be the only element between the two elements, or one or more intervening elements may also be present.

In the drawings, relative dimensions and/or sizes of the various elements, layers, *etc.* may be exaggerated for clarity of illustration. Unless otherwise noted, like reference numerals denote like elements throughout the attached drawings and the written description, and thus, duplicative descriptions thereof may not be provided.

As used herein, the term "and/or" includes any and all combinations of one or more of the associated listed items. Further, the use of "may" when describing embodiments of the present disclosure refers to "one or more embodiments of the present disclosure." Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" may refer to any and all suitable combinations or a subset indicating only a, only b, only c, both a and b, both a and c, both b and c, all of a, b, and c, or variations thereof.

As used herein, the terms "use," "using," and "used" may be considered synonymous with the terms "utilize," "utilizing," and "utilized," respectively.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

It is to be understood that, although the terms "first," "second," "third," *etc.,* may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the spirit and scope of the present disclosure.

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation, in addition to the orientation depicted in the drawings. For example, if the device in the drawings is turned over, elements described as "below" or "beneath" other elements or features would then be oriented "above" or "over" the other elements or features. Thus, the term "below" may encompass both an orientation of above and below. The device may be otherwise oriented (*e.g.,* rotated 90 degrees or at other orientations), and the spatially relative descriptors used herein should be interpreted accordingly.

The terminology used herein is for the purpose of describing particular embodiments of the present disclosure only and is not intended to be limiting of the present disclosure. As used herein, the singular forms "a," "an," and "the" are intended to include the plural forms as well, unless the context clearly indicates otherwise. It is to be further understood that the terms "includes," "including," "comprises," and/or "comprising," when used in this specification, specify the presence of the stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, *etc.* as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an element is referred to as being arranged (or located or positioned) on the "above (or below)" or "on (or under)" a component, it may mean that the arbitrary element is placed in contact with the upper (or lower) surface of the component and may also mean that another component may be interposed between the component and any element arranged (or located or positioned) on (or under) the component.

In addition, it is to be understood that when) an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

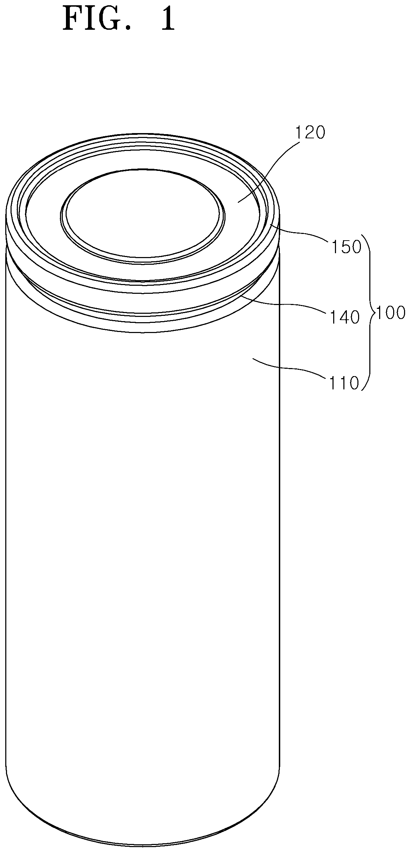

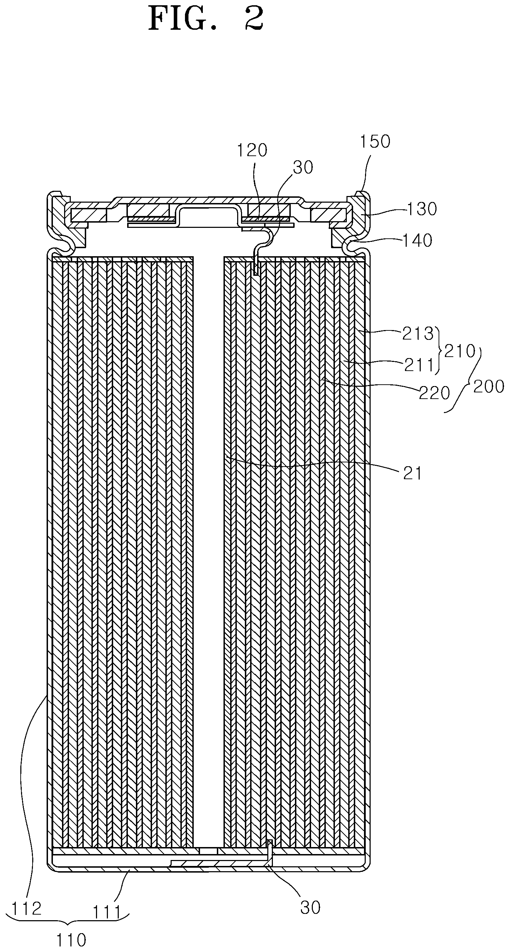

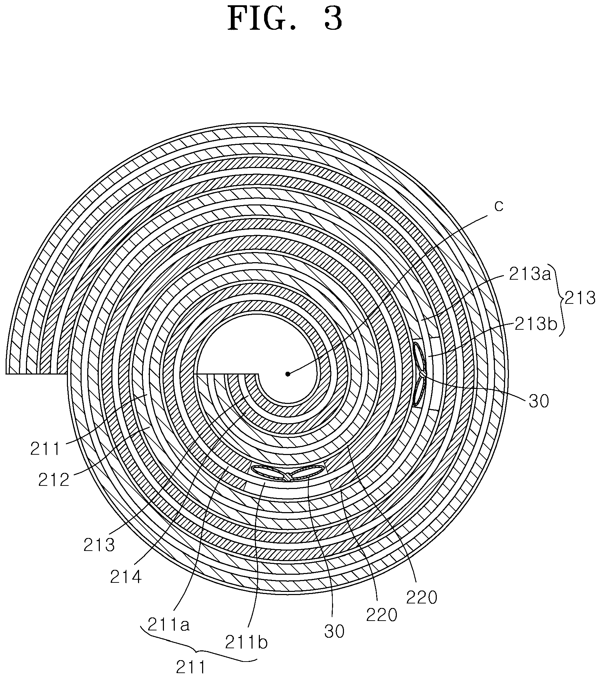

FIG. 1 is a perspective view schematically illustrating a configuration of a secondary battery according to one or more embodiments of the present disclosure, FIG. 2 is a front cross-sectional view schematically illustrating a configuration of the secondary battery of FIG. 1, according to one or more embodiments of the present disclosure, and FIG. 3 is a plan cross-sectional view schematically illustrating a configuration of an electrode assembly of the secondary battery of FIG. 1, according to one or more embodiments of the present disclosure.

Referring to FIGS. 1 to 3, the secondary battery according to one or more embodiments may include a case 100, an electrode assembly 200, and an electrode tab 30.

Hereinafter, a case in which the secondary battery is a lithium-ion secondary battery having a cylindrical shape will be described as an example. However, the present disclosure is not limited thereto, and the secondary battery may be a lithium-polymer battery or a prismatic battery.

The case 100 forms a schematic exterior of the secondary battery, and may entirely support the electrode assembly 200 and the electrode tab 30 to be described in more detail below.

The case 100 may include a can 110, a cap assembly 120, and a gasket 130.

The can 110 may include a bottom part 111 having a substantially circular shape and a cylindrical side wall 112 extending a set or predetermined length upward from a circumference of the bottom part 111. An upper side of the can 110 may be formed to be open. Accordingly, the electrode assembly 200, which will be described in more detail below, may be inserted into the can 110 together with an electrolyte during the assembly process of the secondary battery. The can 110 may be provided to be electrically conductive. For example, the can 110 may include at least one material selected from the group consisting of steel, stainless steel, aluminum, and an aluminum alloy.

The cap assembly 120 is formed to be substantially plate shaped (*e.g.,* in a form of a plate), and may be arranged to face the open side of the can 110, *i.e.,* the upper side of the can 110. The cap assembly 120 may be provided to be electrically conductive. For example, the cap assembly 120 may include at least one material selected from the group consisting of steel, stainless steel, aluminum, and an aluminum alloy. The cap assembly 120 may include a cap-up, a safety vent, a cap-down, an insulating member, and a subplate, but the present disclosure is not limited to these examples, and may be modified in one or more suitable forms.

The gasket 130 may be arranged between the can 110 and the cap assembly 120. The gasket 130 may be formed of an electrically insulating material such as rubber, silicone, and/or the like. The gasket 130 may be arranged such that an inner side surface thereof is around (*e.g.,* entirely surrounds) a circumferential surface of the cap assembly 120. The inner side surface of the gasket 130 may be fixed to the circumferential surface of the cap assembly 120 by one or more suitable types (kinds) of coupling methods such as adhesion, welding, pressing, and/or the like.

The case 100 may further include a beading part 140 formed to be inwardly recessed from an outer side surface of the can 110 and a crimping part 150 bent and extending from an upper part of the beading part 140.

The beading part 140 may be formed by pressing inward a circumference of an outer circumferential surface of the can 110 at (*e.g.,* near) the open side of the can 110. The beading part 140 may be arranged between the cap assembly 120 and the electrode assembly 20. The beading part 140 may prevent or reduce the movement of the electrode assembly 200 inside the can 110, and may determine a position in which the cap assembly 120 is seated on the upper side of the can 110.

The crimping part 150 may be bent and extend from the upper part of the beading part 140. An inner side surface of the crimping part 150 may be arranged to be around (*e.g.,* to entirely surround) an outer side surface of the gasket 130. The crimping part 150 may press an edge of the cap assembly 120 through the gasket 130 to firmly fix the cap assembly 120 to the can 110.

The electrode assembly 200 may function as a unit structure for performing a power charging and discharging operation in the secondary battery.

The electrode assembly 200 may include an electrode plate 210 and a separator 220 which are alternately stacked.

The electrode plate 210 may include a positive electrode plate 211 and a negative electrode plate 213.

The positive electrode plate 211 may function as a positive electrode of the electrode assembly 20. The positive electrode plate 211 may be formed in the form of a foil including a metal material such as aluminum or an aluminum alloy.

The type, kind, size, shape, and/or the like of the positive electrode plate 211 is not particularly limited as long as the positive electrode plate 211 has conductivity I*(e.g.,* is a conductor) and does not cause chemical changes in the secondary battery.

A positive electrode active material layer 212 may be applied onto at least a part of the positive electrode plate 211. The positive electrode plate 211 may include a first coated region 211a onto which the positive electrode active material layer 212 is applied, and a first uncoated region 211b onto which the positive electrode active material layer 212 is not applied. A plurality of first coated regions 211a and a plurality of first uncoated regions 211b may be provided. The first coated regions 211a and the first uncoated regions 211b may be alternately arranged in an extending direction of the positive electrode plate 211.

The positive electrode active material layer 212 may be applied onto both surfaces (*e.g.,* opposite surfaces) of the first coated region 211a, or alternatively, may be applied onto only one surface of the first coated region 211a.

The positive electrode active material layer 212 may include a positive electrode active material.

The positive electrode active material may include a compound (*e.g.,* a lithiated intercalation compound) capable of reversibly intercalating and deintercalating lithium. More specifically, the positive electrode active material may include one or more types (kinds) of composite oxides of lithium and a metal selected from among cobalt, manganese, nickel, iron, and/or a (*e.g.,* any suitable) combination thereof.

For example, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM). Here, conditions of 0 < x < 1, 0 < y < 1, 0 < z < 1, and x+y+z = 1 may be satisfied. The positive electrode active material may include any one of LiFePO₄, LiMnFePO₄, and/or LiNiₓCo_{y}Mn_{z}O₂, and may also include two or all of LiFePO₄, LiMnFePO₄, and/or LiNiₓCo_{y}Mn_{z}O₂.

The positive electrode active material layer 212 may further include a positive electrode conductive material.

The positive electrode conductive material is used to impart conductivity to the positive electrode active material layer 212, and any electrically conductive material that does not cause a chemical change in the battery may be used. Examples of the positive electrode conductive material may include a carbon-based material such as natural graphite, artificial graphite, carbon black, acetylene black, ketjen black, carbon fiber, carbon nanofiber, carbon nanotubes, and/or the like; a metal-based material of a metal powder or metal fiber including copper, nickel, aluminum, silver, and/or the like; a conductive polymer such as a polyphenylene derivative; and/or a (*e.g.,* any suitable) mixture thereof.

The positive electrode active material layer 212 may further include a positive electrode binder.

The positive electrode binder serves to suitably adhere particles constituting the positive electrode active material to each other, and to suitably adhere the positive electrode active material to the positive electrode plate 211.

Examples of the positive electrode binder may include a non-aqueous binder, an aqueous binder, a dry binder, and/or a (*e.g.,* any suitable) combination thereof.

The non-aqueous binder may include polyvinylchloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (*e.g.,* any suitable) combination thereof.

The aqueous binder may be selected from among styrene-butadiene rubber, (meth)acrylated styrene-butadiene rubber, (meth)acrylonitrile-butadiene rubber, (meth)acrylic rubber, butyl rubber, a fluororubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and/or a (e.g., any suitable) combination thereof.

When the aqueous binder is used as the positive electrode binder, a cellulose-based compound capable of imparting viscosity may be further included. As the cellulose-based compound, one or more of carboxymethyl cellulose, hydroxypropyl methyl cellulose, methyl cellulose, or alkali metal salts thereof may be used alone or in combination. As the alkali metal, Na, K, or Li may be used.

The dry binder may be a fibrous polymer material, and for example, polytetrafluoroethylene, polyvinylidene fluoride, a polyvinylidene fluoride-hexafluoropropylene copolymer, polyethylene oxide, and/or a (*e.g.,* any suitable) combination thereof.

The negative electrode plate 213 may function as a negative electrode of the electrode assembly 20. The negative electrode plate 213 may be formed in the form of a foil including a metal material such as copper, a copper alloy, nickel, or a nickel alloy. The negative electrode plate 213 may be arranged to face the positive electrode plate 211 at a certain distance from the positive electrode plate 211.

The type, kind, size, shape, and/or the like of the negative electrode plate 213 are not particularly limited as long as the negative electrode plate 213 has conductivity (e.g., is a conductor) and does not cause chemical changes in the secondary battery.

A negative electrode active material layer 214 may be applied onto at least a part of the negative electrode plate 213. The negative electrode plate 213 may include a second coated region 213a onto which the negative electrode active material layer 214 is applied, and a second uncoated region 213b onto which the negative electrode active material layer 214 is not applied. A plurality of second coated regions 213a and a plurality of second uncoated regions 213b may be provided. The second coated regions 213a and the second uncoated regions 213b may be alternately arranged in an extending direction of the negative electrode plate 213.

The negative electrode active material layer 214 may be applied onto both surfaces (*e.g.,* opposite surfaces) of the second coated region 213a, or alternatively, may be applied onto only one surface of the second coated region 213a.

The negative electrode active material layer 214 may include a negative electrode active material.

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may be a carbon-based negative electrode active material, and examples thereof may include crystalline carbon, amorphous carbon, and/or a (*e.g.,* any suitable) combination thereof. Examples of the crystalline carbon may include graphite such as amorphous, plate-shaped (*e.g.,* in the shape of plates), flake-shaped (*e.g.,* in the shape of flakes), spherical-shaped *I(e.g.,* in the shape of spheres) or fiber-shaped (*e.g.,* in the shape of fibers) natural graphite or artificial graphite. Examples of the amorphous carbon may include soft carbon or hard carbon, a mesophase pitch carbonized product, calcined coke, and/or the like.

The lithium metal alloy may be an alloy of lithium and a metal selected from among Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping/dedoping lithium. The Si-based negative electrode active material may include silicon, a silicon-carbon composite, SiOₓ (0 < x ≤ 2), a Si-Q alloy (where, Q is selected from among an alkali metal, an alkaline-earth metal, a Group 13 element, a Group 14 element (excluding Si), a Group 15 element, a Group 16 element, a transition metal, a rare-earth element, and/or a (*e.g.,* any suitable) combination thereof), and/or a (*e.g.,* any suitable) combination thereof. The Sn-based negative electrode active material may include Sn, SnOₓ (0 < x ≤ 2), a Sn-based alloy, and/or a (*e.g.,* any suitable) combination thereof.

The silicon-carbon composite may be a composite of silicon and amorphous carbon. According to one or more embodiments, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

The negative electrode active material layer 214 may further include a negative electrode conductive material and a negative electrode binder.

The negative electrode conductive material is used to impart conductivity to the negative electrode active material layer 214, and any electrically conductive material that does not cause a chemical change in the battery may be used. Examples of the negative electrode conductive material may include a carbon-based material such as natural graphite, artificial graphite, carbon black, acetylene black, ketjen black, carbon fiber, carbon nanofiber, carbon nanotubes, and/or the like; a metal-based material of a metal powder or metal fiber including copper, nickel, aluminum, silver, and/or the like; a conductive polymer such as a polyphenylene derivative; and/or a (*e.g.,* any suitable) mixture thereof.

The negative electrode binder serves to adhere particles constituting the negative electrode active material to each other well, and to adhere the negative electrode active material to the negative electrode plate 213 well.

Examples of the negative electrode binder may include a non-aqueous binder, an aqueous binder, a dry binder, and/or a (*e.g.,* any suitable) combination thereof.

The non-aqueous binder may include polyvinylchloride, carboxylated polyvinylchloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among styrene-butadiene rubber, (meth)acrylated styrene-butadiene rubber, (meth)acrylonitrile-butadiene rubber, (meth)acrylic rubber, butyl rubber, a fluororubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and/or a (*e.g.,* any suitable) combination thereof.

When the aqueous binder is used as the negative electrode binder, a cellulose-based compound capable of imparting viscosity may be further included. As the cellulose-based compound, one or more of carboxymethyl cellulose, hydroxypropyl methyl cellulose, methyl cellulose, or alkali metal salts thereof may be used alone or in combination. As the alkali metal, Na, K, or Li may be used.

The dry binder may be a fibrous polymer material, and for example, polytetrafluoroethylene, polyvinylidene fluoride, polyvinylidene a fluoride-hexafluoropropylene copolymer, polyethylene oxide, and/or a (*e.g.,* any suitable) combination thereof.

The separator 220 may be arranged between the positive electrode plate 211 and the negative electrode plate 213. The separator 220 may prevent or reduce a short circuit between the positive electrode plate 211 and the negative electrode plate 213 while allowing the movement of lithium ions between the positive electrode plate 211 and the negative electrode plate 213.

The separator 220 may be made of polyethylene, polypropylene, polyvinylidene fluoride, or a multilayer film of two or more layers thereof, and may also be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 220 may include a porous substrate, and a coating layer including an organic material, an inorganic material, and/or a (*e.g.,* any suitable) combination thereof located on at least one surface (e*.g.,* on one surface or on opposite surfaces) of the porous substrate.

The porous substrate may be a polymer film formed of a polymer, or a copolymer or mixture of two or more selected from among polyolefins such as polyethylene, polypropylene, and/or the like, a polyester such as polyethylene terephthalate, polybutylene terephthalate, and/or the like, polyacetal, polyamide, polyimide, polycarbonate, polyether ether ketone, polyaryl ether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene.

The organic material may include a polyvinylidene fluoride-based polymer or a (meth)acrylic-based polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (*e.g.,* any suitable) combination thereof, but the present disclosure is not limited thereto.

The organic and inorganic materials may be present by being mixed in one coating layer or may be present in a form in which a coating layer including organic materials and a coating layer including inorganic materials are laminated.

The electrode assembly 200 may have a shape that is wound around a winding axis C.

More specifically, the positive electrode plate 211 and the negative electrode plate 213 may be wound clockwise or counterclockwise around the winding axis C while one surface of each of the positive electrode plate 211 and the negative electrode plate 213 are arranged to face each other. Accordingly, the electrode assembly 200 may have substantially a jelly roll shape. A cross-sectional shape of the electrode assembly 200 may be changed in design into one or more suitable shapes such as an elliptical shape, a polygonal shape, and/or the like, in addition to a circular shape as illustrated in FIG. 3. Here, the winding axis C may be a straight line passing through a center part of the electrode assembly 200 and arranged normal (*e.g.,* perpendicular) to the open surface of the case 10.

A pair of separators 220 may be provided. The pair of separators 220 may be arranged to face both surfaces of the positive electrode plate 211 or the negative electrode plate 213 (*e.g.,* one separator 220 arranged to face a first surface of each of the positive electrode plate 211 and the negative electrode plate 213 and a second separator 220 arranged to face a second surface, opposite the first surface, of each of the positive electrode plate 211 and the negative electrode plate 213). The pair of separators 220 may be wound around the winding axis C together with the positive electrode plate 211 and the negative electrode plate 213.

The electrode assembly 200 may be arranged in the case, more specifically, inside the can 110. The winding axis C of the electrode assembly 200 may be arranged coaxially with a central axis of the can 110. A lower end part and an upper end part of the electrode assembly 200 may be arranged to face the bottom part 111 and the beading part 140 of the can 110, respectively.

A center pin 21 may be additionally installed inside the electrode assembly 20. The center pin 21 may have the form of a hollow circular pipe. The center pin 21 may be coupled to approximately the center of the electrode assembly 20, and a central axis thereof may be arranged to coincide with the winding axis C of the electrode assembly 20. The center pin 21 may include at least one of materials such as steel, stainless steel, aluminum, an aluminum alloy, and/or polybutylene terephthalate, for example. The center pin 21 serves to suppress or reduce deformation of the electrode assembly 200 during charging and discharging of the battery, and serves as a moving path for a gas generated inside the secondary battery. Of course, in some cases, the center pin 21 may not be provided.

The electrode tab 30 may be connected to the electrode plate 210 of the electrode assembly 20. The electrode tab 30 may function as a component that electrically connects the case 100 to the electrode assembly 200. One side of the electrode tab 30 may be arranged inside the electrode assembly 200, and the other side of the electrode tab 30 may protrude to the outside of the electrode assembly 200.

A plurality of electrode tabs 30 may be provided. As an example, a pair of electrode tabs 30 may be provided. One electrode tab 30 of the pair of electrode tabs 30 may be arranged between the positive electrode plate 211 and the separator 220, and both sides (*e.g.,* opposite sides) thereof in a longitudinal direction may be connected to the positive electrode plate 211 and the cap assembly 120. Both sides of the other electrode tab 30 of the pair of electrode tabs 30 may be arranged between the negative electrode plate 213 and the separator 220, and both sides (*e.g.,* opposite sides) of the other electrode tab 30 in the longitudinal direction may be connected to the negative electrode plate 213 and the can 110.

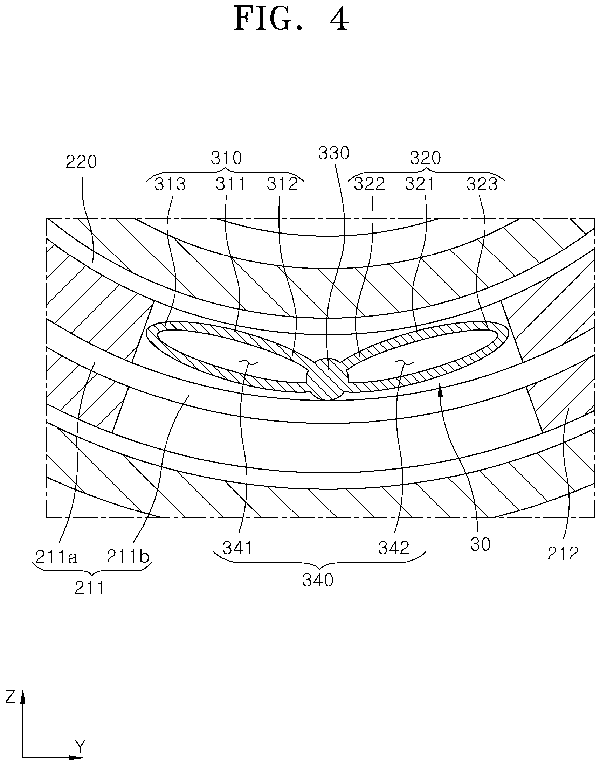

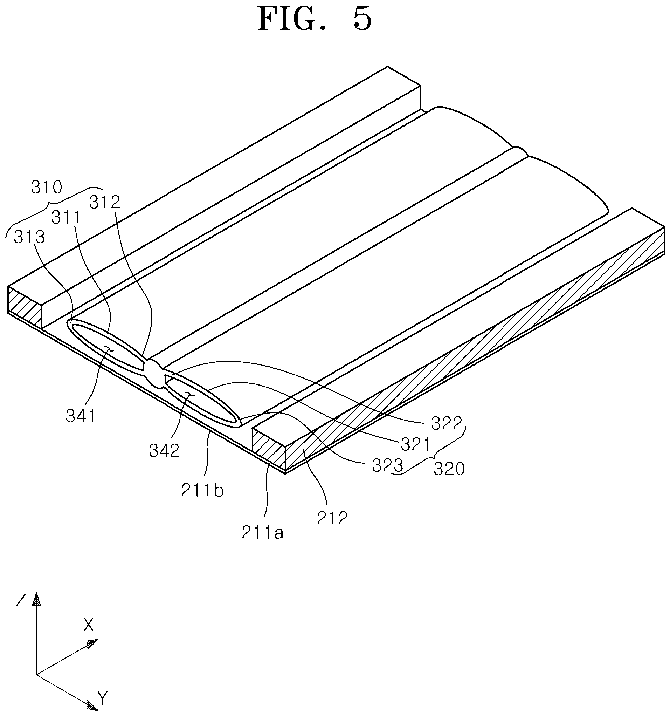

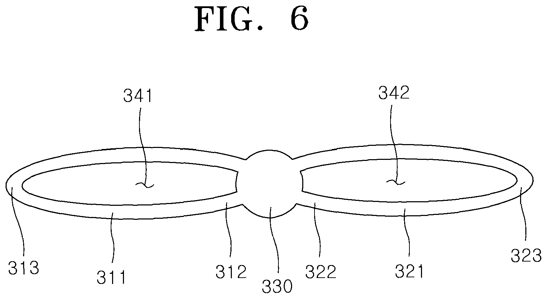

FIG. 4 is an enlarged cross-sectional view schematically illustrating an installation state of the electrode tab according to one or more embodiments of the present disclosure, FIG. 5 is a perspective view schematically illustrating a configuration of the electrode tab according to one or more embodiments of the present disclosure, and FIG. 6 is a cross-sectional view schematically illustrating a configuration of the electrode tab according to one or more embodiments of the present disclosure.

Among the plurality of electrode tabs 30, the electrode tab 30 connected to the positive electrode plate 211 is illustrated in FIGS. 4 and 5 as an example, but a detailed configuration of the electrode tab 30 to be described in more detail below may be equally applied to the electrode tab 30 connected to the negative electrode plate 213.

Hereinafter, a case in which the longitudinal direction of the electrode tab 30 is arranged substantially parallel to the winding axis C of the electrode assembly 200 will be described as an example. However, the electrode tab 30 is not limited thereto, and the longitudinal direction thereof may also be arranged to intersect the winding axis C of the electrode assembly 200.

Referring to FIGS. 4 to 6, the electrode tab 30 according to one or more embodiments may include a first tab body 310, a second tab body 320, and a connection member 330.

The first tab body 310 and the second tab body 320 may form the exterior on both sides (*e.g.,* opposite sides) of the electrode tab 30. The first tab body 310 and the second tab body 320 may be formed of an electrically conductive material such as copper, aluminum, nickel, and/or the like.

Longitudinal directions of the first tab body 310 and the second tab body 320 may be arranged substantially parallel to each other. When the electrode tab 30 is connected to the electrode plate 210 of the electrode assembly 20, the longitudinal directions of the first tab body 310 and the second tab body 320 may be arranged substantially parallel to the winding axis C of the electrode assembly 20.

The first tab body 310 and the second tab body 320 may be arranged to face each other (*e.g.,* arranged opposite to each other) in a direction intersecting the longitudinal direction of the first tab body 310. As an example, the first tab body 310 and the second tab body 320 may be arranged to face each other (e.g., arranged opposite to each other) in a width direction of the first tab body 310.

The longitudinal direction of each of the first tab body 310 and the second tab body 320 described in more detail below may be a direction substantially parallel to an X-axis based on FIG. 5, and the width direction of each of the first tab body 310 and the second tab body 320 may be a direction substantially parallel to a Y-axis based on FIG. 5.

The first tab body 310 according to one or more embodiments may include a first center part 311, a first inner end part 312, and a first outer end part 313.

The first center part 311 may form an exterior of a central region of the first tab body 310.

The first inner end part 312 may extend from one side of the first center part 311 in the width direction of the first tab body 310. For example, the first inner end part 312 may be a region at one end part of the first tab body 310, which extends toward the second tab body 320, of both end parts of the first tab body 310 spaced and/or apart (*e.g.,* spaced apart or separated) from each other in the width direction of the first tab body 310. The first inner end part 312 may be connected to the connection member 330 to be described in more detail below.

The first outer end part 313 may extend in the width direction of the first tab body 310 from the other side of the first center part 311. The first outer end part 313 may be spaced and/or apart (*e.g.,* spaced apart or separated) from the first inner end part 312. For example, the first outer end part 313 may be a region on the other end part of the first tab body 310, which extends in a direction away from the second tab body 320, of both end parts of the first tab body 310 spaced and/or apart (*e.g.,* spaced apart or separated) from each other in the width direction of the first tab body 310.

A cross-sectional area of the first tab body 310 may decrease from the first center part 311 toward the first outer end part 313. Here, the cross-sectional area of the first tab body 310 may be an area of the first tab body 310 on a plane (*e.g.,* in a plan view) normal (*e.g.,* perpendicular) to the Y-axis based on FIG. 5. In this case, cross-sectional area of first tab body 310 normal (*e.g.,* perpendicular) to the X-axis, a surface of the first outer end part 313 may have a curved shape curved with a set or predetermined curvature. Accordingly, if (*e.g.,* when) the electrode assembly 200 expands, the first outer end part 313 can prevent or reduce excessive stress from being applied to the electrode plate 210 due to its own curvature.

The cross-sectional area of the first tab body 310 may decrease from the first center part 311 toward the first inner end part 312. Accordingly, if (*e.g.,* when) curvature of the electrode plate 210 changes during the winding process of the electrode plate 210, the first inner end part 312 can guide the first tab body 310 to more smoothly rotate around the connection member 330.

As the cross-sectional area of the first tab body 310 is configured as described above, a cross-sectional shape of the first tab body 310 normal (*e.g.,* perpendicular) to the X-axis may have a substantially circular or elliptical shape.

The second tab body 320 may include a second center part 321, a second inner end part 322, and a second outer end part 323.

The second center part 321 may form an exterior of a central region of the second tab body 320.

The second inner end part 322 may extend from one side of the second center part 321 in the width direction of the second tab body 320. For example, the second inner end part 322 may be a region on one end part of the second tab body 320, which extends toward the first tab body 310, of both end parts of the second tab body 320 spaced and/or apart (*e.g.,* spaced apart or separated) from each other in the width direction of the second tab body 320. The second inner end part 322 may be connected to the connection member 330 to be described in more detail below.

The second outer end part 323 may extend from the other side of the second center part 321 in the width direction of the second tab body 320. The second outer end part 323 may be spaced and/or apart (*e.g.,* spaced apart or separated) from the second inner end part 322. For example, the second outer end part 323 may be a region on the other end part of the second tab body 320, which extends in a direction away from the first tab body 310, of both end parts of the second tab body 320 spaced and/or apart (*e.g.,* spaced apart or separated) from each other in the width direction of the second tab body 320.

A cross-sectional area of the second tab body 320 may decrease from the second center part 321 toward the second outer end part 323. Here, the cross-sectional area of the second tab body 320 may refer to a cross-sectional area of the second tab body 320 normal I*(e.g.,* perpendicular) to the Y-axis based on FIG. 5. In this case, in a cross-sectional area of the second tab body 320 normal (e.g., perpendicular) to the X-axis, a surface of the second outer end part 323 may have a curved shape curved with a set or predetermined curvature. Accordingly, if I*(e.g.,* when) the electrode assembly 200 expands, the second outer end part 323 can prevent or reduce excessive stress from being applied to the electrode plate 210 due to its own curvature.

The cross-sectional area of the second tab body 320 normal (*e.g.,* perpendicular) to the Y-axis may decrease from the second center part 321 toward the second inner end part 322. Accordingly, if (*e.g.,* when) the curvature of the electrode plate 210 changes, the second inner end part 322 may guide the second tab body 320 to more smoothly rotate around the connection member 330.

As the cross section of the second tab body 320 is configured as described above, a cross-sectional shape of the second tab body 320 normal (*e.g.,* perpendicular) to the X-axis may have a substantially circular or elliptical shape.

The connection member 330 may be arranged between the first tab body 310 and the second tab body 320. The connection member 330 may function as a component to mechanically and electrically interconnect the first tab body 310 and the second tab body 320. The connection member 330 may be formed of the same material as the first tab body 310 and the second tab body 320.

The connection member 330 according to one or more embodiments may be formed to have a band or strip shape that extends continuously in the longitudinal direction of the first tab body 310 and the second tab body 320. The connection member 330 may be arranged between the first inner end part 312 of the first tab body 310 and the second inner end part 322 of the second tab body 320. The first tab body 310, the connection member 330, and the second tab body 320 may be sequentially arranged in the width direction of the first tab body 310. One side of the connection member 330 may be connected to the first inner end part 312 and another side of the connection member 330 may be connected to the second inner end part 322. A cross-sectional shape of the connection member 330 is not limited to a circular shape illustrated in FIGS. 4 and 5, and one or more suitable design changes are possible within a technical concept of the shape interconnecting the first tab body 310 and the second tab body 320 between the first tab body 310 and the second tab body 320.

The connection member 330 may be fixed to the electrode plate 210 of the electrode assembly 20. As an example, the connection member 330 provided on one of the pair of electrode tabs 30 may be welded to the first uncoated region 211b of the positive electrode plate 211. In one or more embodiments, the connection member 330 provided on the other one of the pair of electrode tabs 30 may be arranged between the negative electrode plate 213 and the separator 220 and welded to the second uncoated region 213b of the negative electrode plate 213.

The first tab body 310 and the second tab body 320 may be separated from the electrode plate 210 of the electrode assembly 20. More specifically, the first tab body 310 and the second tab body 320 are not directly coupled to the electrode plate 210 of the electrode assembly 20, but may simply be in contact with the electrode plate 210. As an example, the first tab body 310 and the second tab body 320 provided on one of the pair of electrode tabs 30 may simply be in contact with the first uncoated region 211b of the positive electrode plate 211. In one or more embodiments, the first tab body 310 and the second tab body 320 provided on the other one of the pair of electrode tabs 30 may simply be in contact with the second uncoated region 213b of the negative electrode plate 213.

The first tab body 310 and the second tab body 320 may be rotatably connected about the connection member 330. When the curvature of the electrode plate 210 changes, the first tab body 310 and the second tab body 320 rotate clockwise or counterclockwise around the connection member 330, and an angle between the first tab body 310 and the second tab body 320 may be freely adjusted. Accordingly, if (*e.g.,* when) the electrode assembly 200 expands or the electrode assembly 200 is wound, the first tab body 310 and the second tab body 320 may relieve pressure applied to the electrode plate 210 and prevent or reduce a crack phenomenon of the electrode plate 210 by adjusting the angle therebetween.

A buffer member 340, as shown, for example, in FIG. 4, may be arranged inside at least one of the first tab body 310 and the second tab body 320. The buffer member 340 may function as a component to vary a volume of the electrode tab 30 by externally applied pressure. Accordingly, if (*e.g.,* when) the electrode assembly 200 expands, the electrode tab 30 can absorb a change in pressure applied between the electrode plate 210 and the separator 220 through its own volume change, and can prevent or reduce damage to the electrode plate 210.

Hereinafter, a case in which the buffer member 340 is arranged in both the first tab body 310 and the second tab body 320 will be described as an example. However, the buffer member 340 is not limited thereto, and may be arranged in only one of the first tab body 310 or the second tab body 320.

The buffer member 340 according to one or more embodiments may include a first chamber 341 arranged inside the first tab body 310, and a second chamber 342 arranged inside the second tab body 320.

The first chamber 341 and the second chamber 342 according to one or more embodiments may be empty spaces formed inside the first tab body 310 and the second tab body 320, respectively. The first chamber 341 and the second chamber 342 may extend in (along) the longitudinal directions of the first tab body 310 and the second tab body 320, respectively. The first chamber 341 may pass through both ends (e.g., opposite ends) of the first tab body 310 in the longitudinal direction of the first tab body 310 and communicate with an external space of the first tab body 310, and the second chamber 342 may pass through both ends (*e.g.,* opposite ends) of the second chamber 342 in the longitudinal direction of the second tab body 320 and communicate with an external space of the second tab body 320.

In one or more embodiments, the first chamber 341 and the second chamber 342 may pass through the first outer end part 313 and the second outer end part 323 and communicate with the external spaces of the first tab body 310 and the second tab body 320, respectively.

Cross-sectional shapes of the first chamber 341 and the second chamber 342 may be the same as the cross-sectional shapes of the first tab body 310 and the second tab body 320, respectively. Accordingly, the first chamber 341 and the second chamber 342 can maintain constant thicknesses of the first tab body 310 and the second tab body 320 over the entire circumferences of the first tab body 310 and the second tab body 320, respectively.

The case in which the first chamber 341 and the second chamber 342 form empty spaces inside the first tab body 310 and the second tab body 320, respectively, has been described above as an example, but the first chamber 341 and the second chamber 342 are not limited thereto, and it is possible to fill inner spaces of the first tab body 310 and the second tab body 320 with an elastically deformable material such as silicone, rubber, and/or the like.

Hereinafter, a manufacturing process of the secondary battery according to one or more embodiments of the present disclosure will be described.

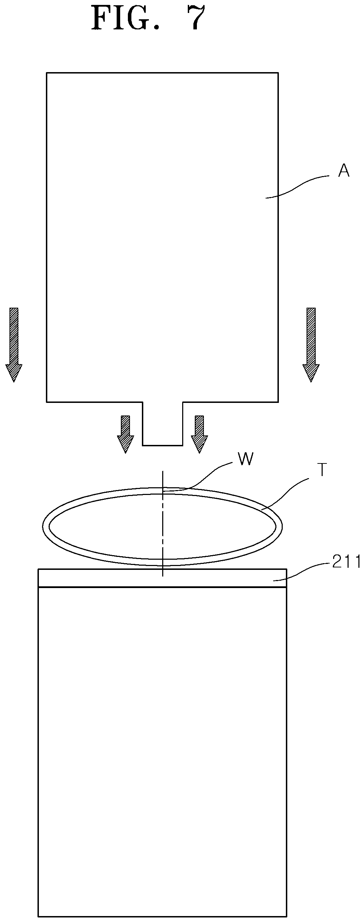

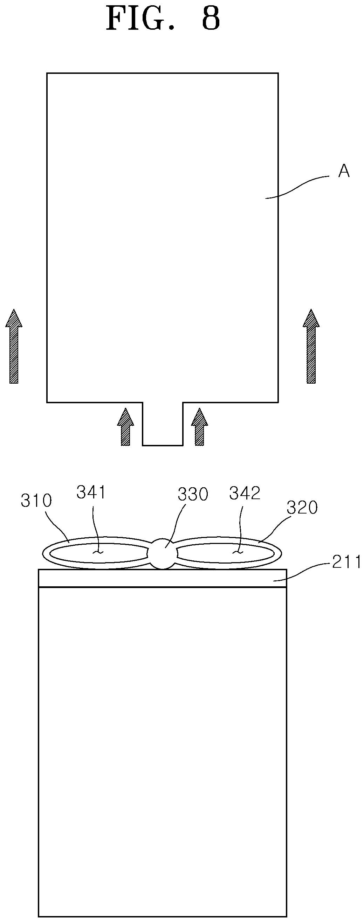

FIGS. 7 and 8 are each a schematic view illustrating a manufacturing process of the secondary battery according to one or more embodiments of the present disclosure.

Referring to FIGS. 7 and 8, a tab ring T in the form of a ring with a hollow interior is seated on the first uncoated region 211b of the positive electrode plate 211.

Subsequently, by using a welding device A, a central region W of the tab ring T is pressed toward the positive electrode plate 211, and the central region W of the tab ring T is welded onto the first uncoated region 211b of the positive electrode plate 211.

In this process, the central region W of the tab ring T may be fused and bonded to the first uncoated region 211b of the positive electrode plate 211 while in contact therewith by heat applied by the welding device A.

As both inner side surfaces of the central region W of the tab ring T are fused while in contact with each other, the connection member 330 may be formed in the central region W of the tab ring T. The connection member 330 may be arranged substantially parallel to a winding axis of the electrode plate 210.

The first tab body 310 and the second tab body 320 may be formed on both sides (e.g., opposite sides) of the connection member 330, and the first chamber 341 and the second chamber 342 may be formed inside the first tab body 310 and the second tab body 320, respectively.

The same process may be performed on the negative electrode plate 213.

After the bonding of electrode tabs 30 to the positive electrode plate 211 and the negative electrode plate 213 is completed, the positive electrode plate 211, the negative electrode plate 213, and the pair of separators 220 may be alternately stacked.

Thereafter, the electrode assembly 200 may be formed by winding the positive electrode plate 211, the negative electrode plate 213, and the pair of separators 220 around the winding axis C (*e.g.,* winding the positive electrode plate 211, a first separator 220, the negative electrode plate 213, and a second separator 220 around the winding axis).

Thereafter, the electrode assembly 200 may be inserted into the can 110, and the cap assembly 120 may be coupled to an upper side of the can 110.

In this case, the electrode tab 30 connected to the positive electrode plate 211 may be coupled to the cap assembly 120, and the electrode tab 30 connected to the negative electrode plate 213 may be connected to the can 110.

Hereinafter, an operation of the secondary battery according to one or more embodiments of the present disclosure will be described.

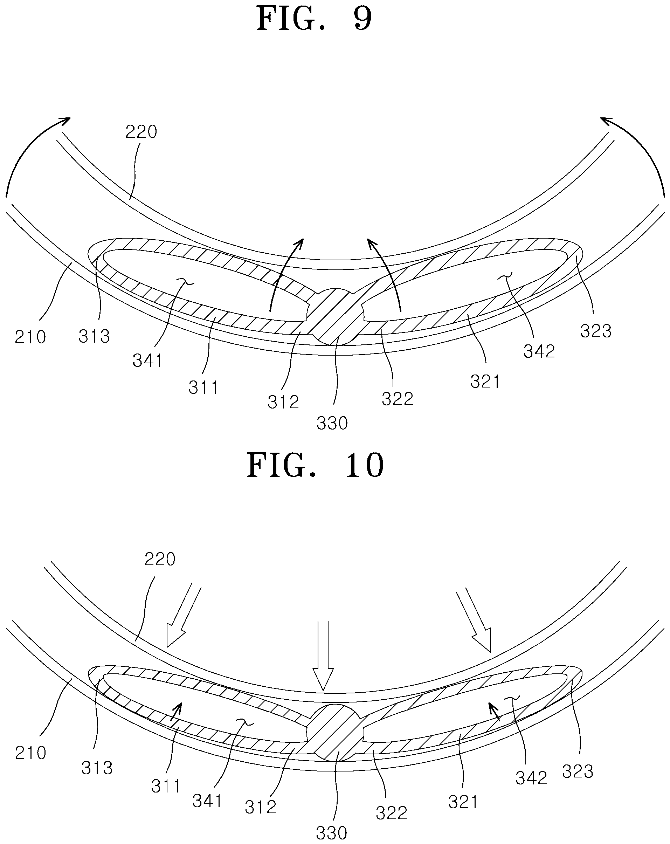

FIGS. 9 and 10 are each a cross-sectional view schematically illustrating an operation of the secondary battery according to one or more embodiments of the present disclosure.

Referring to FIG. 9, in the process in which the electrode plate 210 is wound around the winding axis, the first tab body 310 and the second tab body 320 may be rotated clockwise or counterclockwise around the connection member 330 according to a change in curvature of the electrode plate 210, and an angle therebetween may be adjusted.

Referring to FIG. 10, as the electrode assembly 200 expands during a charging and discharging operation of the secondary battery, a compressive force may be applied onto the electrode tab 30 located between the positive electrode plate 211 and the separator 220 or between the negative electrode plate 213 and the separator 220.

Such a compressive force may cause the buffer member 340 to vary the volume of the electrode tab 30, thereby reducing the magnitude of pressure applied between the electrode assembly 200 and the electrode tabs 30.

More specifically, the volume of the first tab body 310 may be reduced as the first chamber 341 arranged inside the first tab body 310 is compressed. In one or more embodiments, the volume of the second tab body 320 may be reduced as the second chamber 342 arranged inside the second tab body 320 is compressed.

As the volume of the first tab body 310 and/or the second tab body 320 is reduced, the magnitude of pressure applied between the electrode tab 30 and the positive electrode plate 211 and/or between the electrode tab 30 and the negative electrode plate 213 can be reduced, and damage to the positive electrode plate 211 and/or the negative electrode plate 213 can be prevented or reduced.

In one or more embodiments, because the surfaces of the first outer end part 313 and the second outer end part 323 have curved shapes, stress applied from the first outer end part 313 and the second outer end part 323 to the positive electrode plate 211 or the negative electrode plate 213 may be relieved if (e.g., when) the electrode assembly 200 expands.

Hereinafter, a secondary battery according to one or more embodiments of the present disclosure will be described.

The secondary battery according to one or more embodiments may be configured to be different from the secondary battery according to the one or more embodiments of the present disclosure described above only in a detailed configuration of the connection member 330. Accordingly, in describing the secondary battery according to one or more embodiments, only the detailed configuration of the connection member 330, which is different from that of the secondary battery according to previously described embodiments of the present disclosure, will be described.

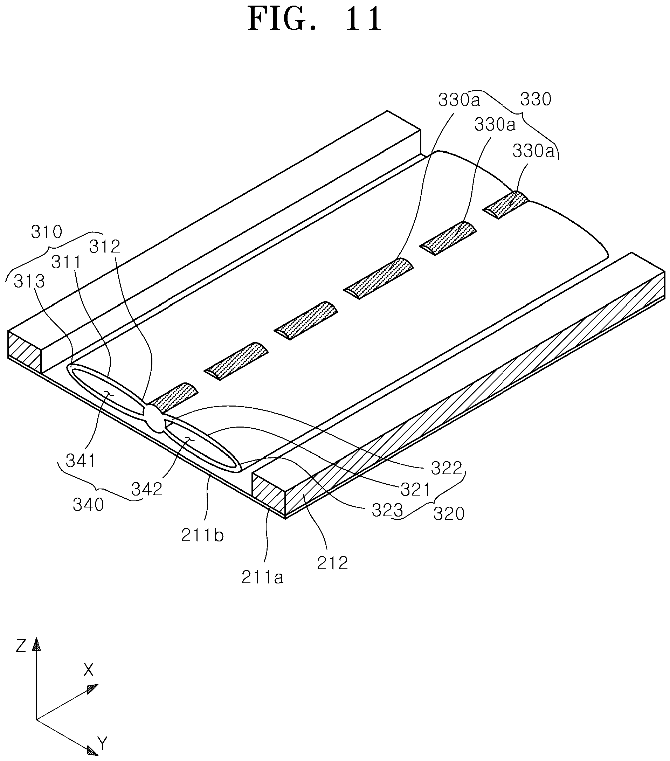

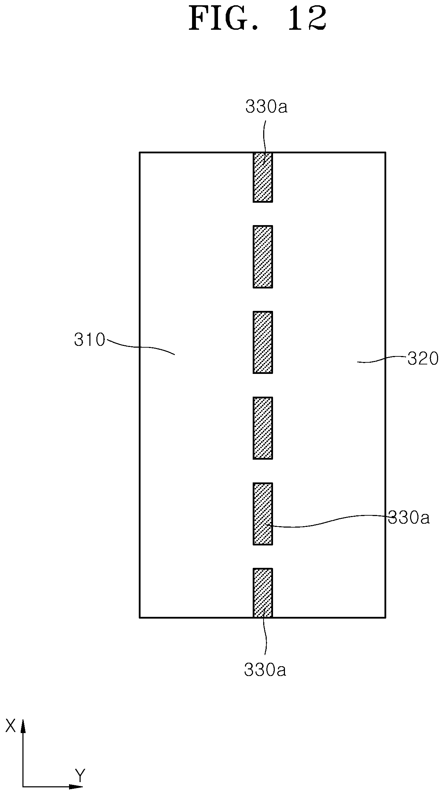

FIG. 11 is a perspective view schematically illustrating a configuration of an electrode tab according to one or more embodiments of the present disclosure, and FIG. 12 is a plan view schematically illustrating a configuration of the electrode tab of FIG. 11, according to one or more embodiments of the present disclosure.

Referring to FIGS. 11 and 12, a connection member 330 according to one or more embodiments may include a plurality of connection beads 330a.

The plurality of connection beads 330a may be arranged in a row in the longitudinal direction of each of the first tab body 310 and the second tab body 320. Intervals between adjacent connection beads 330a may be the same, or alternatively, the intervals may be formed differently from each other.

The number, shape, and/or the like of the connection beads 330a are not limited to those illustrated in FIGS. 11 and 12, and may be changed in design to one or more suitable numbers and/or shapes according to the lengths of the first tab body 310 and the second tab body 320 and the intervals between the connection beads 330a.

The plurality of connection beads 330a may be formed by a method of pressing and welding the central region W of the tab ring T a plurality of times with the welding device A.

Hereinafter, a secondary battery according to one or more embodiments of the present disclosure will be described.

The secondary battery according to one or more embodiments may be configured to be different from the secondary battery according to the one or more embodiments of the present disclosure described above only in a detailed configuration of the electrode tab 30. Accordingly, in describing the secondary battery according to one or more embodiments, only the detailed configuration of the electrode tab 30, which is different from that of the secondary battery according to previously described embodiments of the present disclosure, will be described.

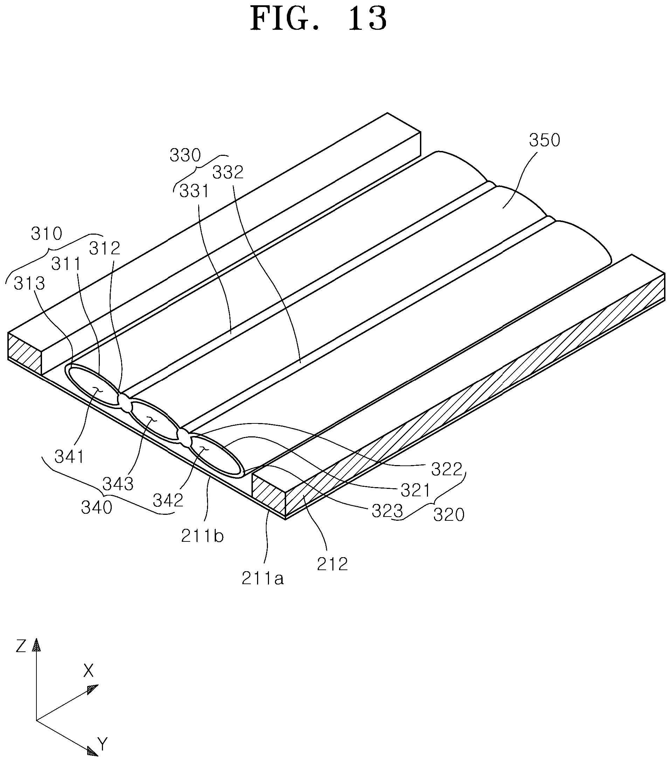

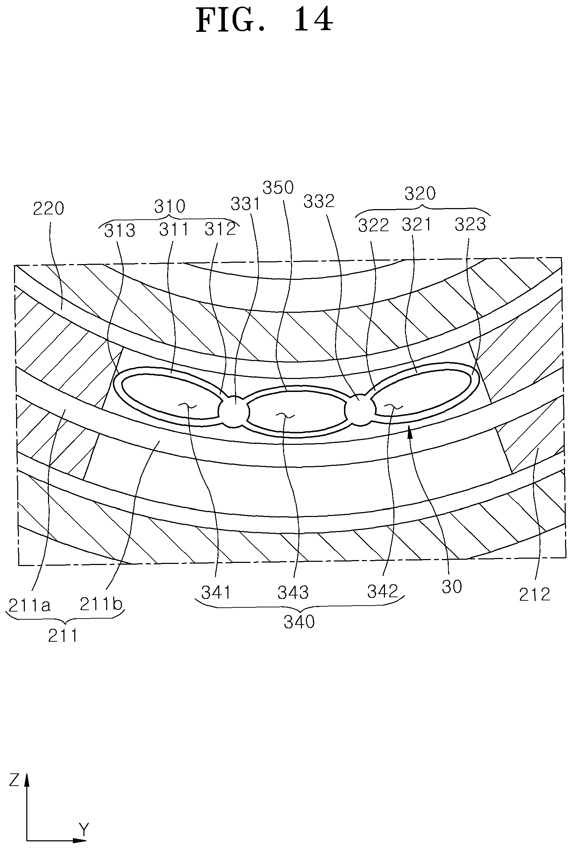

FIG. 13 is a perspective view schematically illustrating a configuration of an electrode tab according to one or more embodiments of the present disclosure, and FIG. 14 is a cross-sectional view schematically illustrating a configuration of the electrode tab of FIG. 13, according to the one or more embodiments of the present disclosure.

The electrode tab 30 according to one or more embodiments may further include a third tab body 350.

The third tab body 350 may be arranged between the first tab body 310 and the second tab body 320. The third tab body 350 may be formed of the same electrically conductive material as the first tab body 310 and the second tab body 320.

A longitudinal direction of the third tab body 350 according to one or more embodiments may be arranged substantially parallel to a longitudinal direction of the first tab body 310 (an X-axis direction based on FIG. 14). The third tab body 350 may be arranged between the first inner end part 312 and the second inner end part 322 facing *(e*.*g.,* opposite to) each other in a width direction of the first tab body 310. For example, the first tab body 310, the third tab body 350, and the second tab body 320, may be sequentially arranged in the width direction of the first tab body 310 (a Y-axis direction based on FIG. 14).

The third tab body 350 may be formed such that a cross-sectional area in a direction perpendicular to the Y-axis thereof decreases toward the first tab body 310 and the second tab body 320. A surface of the third tab body 350 may be formed to have a curved shape. Accordingly, if (*e.g.,* when) the third tab body 350 comes into contact with the electrode plate 210, localized stress concentration on the electrode plate 210 may be prevented or reduced.

The connection member 330 may include a first connection member 331 and a second connection member 332.

The first connection member 331 may be arranged between the first tab body 310 and the third tab body 350. The first connection member 331 according to one or more embodiments may be formed to have a band or strip shape that extends continuously in the longitudinal direction of the first tab body 310. The first connection member 331 may be arranged between the first inner end part 312 of the first tab body 310 and one end part of the third tab body 350 arranged to face the first inner end part 312. One side of the first connection member 331 may be integrally connected to the first inner end part 312 and another side of the first connection member 331 may be integrally connected to one end part of the third tab body 350.

The first tab body 310 and the third tab body 350 may be rotatably connected about the first connection member 331. When curvature of the electrode plate 210 changes, the first tab body 310 and the third tab body 350 rotate clockwise or counterclockwise around the first connection member 331, and an angle between the first tab body 310 and the third tab body 350 may be freely adjusted.

The second connection member 332 may be arranged between the second tab body 320 and the third tab body 350. The second connection member 332 according to one or more embodiments may be formed to have a band or strip shape that extends continuously in the longitudinal direction of the second tab body 320. The second connection member 332 may be arranged between the second inner end part 322 of the second tab body 320 and the other end part of the third tab body 350 arranged to face the second inner end part 322. One side of the second connection member 332 may be integrally connected to the second inner end part 322 and another side of the second connection member 332 may be integrally connected to the other end part of the third tab body 350.

The second tab body 320 and the third tab body 350 may be rotatably connected about the second connection member 332. When the curvature of the electrode plate 210 changes, the second tab body 320 and the third tab body 350 rotate clockwise or counterclockwise around the second connection member 332, and an angle between the second tab body 320 and the third tab body 350 may be freely adjusted.

The buffer member 340 may further include a third chamber 343.

The third chamber 343 according to one or more embodiments may be an empty space formed inside the third tab body 350. The third chamber 343 may extend in (along) the longitudinal direction of the third tab body 350. The third chamber 343 may pass through both ends (*e.g.,* opposite ends) of the third tab body 350 in the longitudinal direction and communicate with an external space of the third tab body 350.

A cross-sectional shape of the third tab body 350 normal (*e.g.,* perpendicular) to the X-axis may be substantially the same as a cross-sectional shape of the second tab body 320 normal (*e.g.,* perpendicular) to the X-axis.

The case in which the third chamber 343 forms an empty space inside the third tab body 350 has been described above as an example, but the third chamber 343 is not limited thereto, and it is possible to fill the inner space of the third tab body 350 with an elastically deformable material, such as silicone, rubber, and/or the like.

Hereinafter, a secondary battery according to one or more embodiments of the present disclosure will be described.

The secondary battery according to one or more embodiments may be configured to be different from the secondary battery according to one or more embodiments of the present disclosure described above only in a detailed configuration of the connection member 330. Accordingly, in describing the secondary battery according to one or more embodiments, only the detailed configuration of the connection member 330, which is different from that of the secondary battery according to previously described embodiments of the present disclosure, will be described.

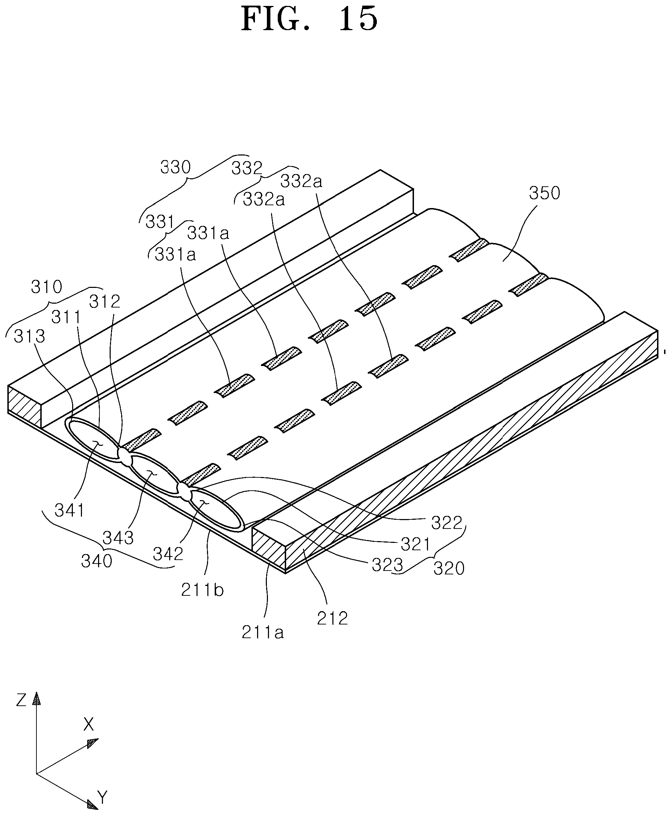

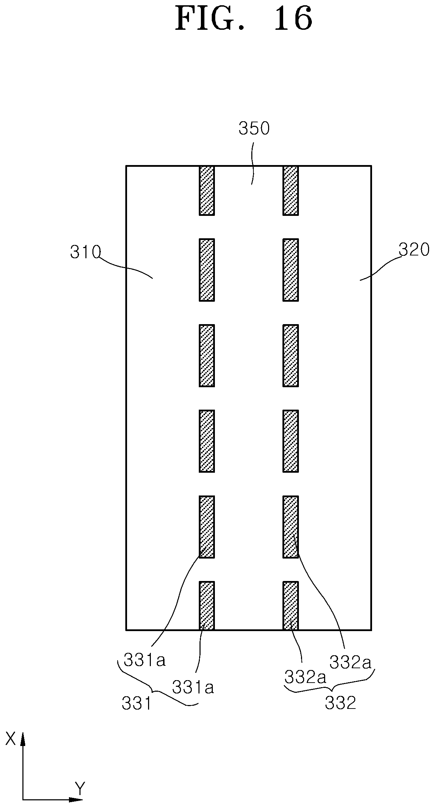

FIG. 15 is a perspective view schematically illustrating a configuration of an electrode tab according to one or more embodiments of the present disclosure, and FIG. 16 is a plan view schematically illustrating a configuration of the electrode tab of FIG. 15, according to one or more embodiments of the present disclosure.

Referring to FIGS. 15 and 16, the first connection member 331 according to one or more embodiments may include a plurality of first connection beads 331a, and the second connection member 332 may include a plurality of second connection beads 332a.

The plurality of first connection beads 331a are arranged between the first tab body 310 and the third tab body 350, and may be arranged in a row in the longitudinal direction of each of the first tab body 310 and the third tab body 350. Intervals between adjacent first connection beads 331a may be the same, or alternatively, the intervals may be formed differently from each other.

The plurality of second connection beads 332a are arranged between the second tab body 320 and the third tab body 350, and may be arranged in a row in the longitudinal direction of the second tab body 320 and the third tab body 350. Intervals between adjacent second connection beads 332a may be the same, or alternatively, the intervals may be formed differently from each other.

The case in which both the first connection member 331 and the second connection member 332 include the plurality of first connection beads 331a and the plurality of second connection beads 332a has been described above as an example, but the first connection member 331 and the second connection member 332 are not limited thereto, and any one of the first connection member 331 and/or the second connection member 332 may be formed to have a band or strip shape that extends continuously in the longitudinal direction of the first tab body 310 as described with reference, for example, to FIGS. 13 and 14.

Hereinafter, a secondary battery according to one or more embodiments of the present disclosure will be described.

The secondary battery according to one or more embodiments may be configured to be different from the secondary battery according to one or more embodiments of the present disclosure described above only in a detailed configuration of the third tab body 350 and the connection member 330. Accordingly, in describing the secondary battery according to one or more embodiments, only the detailed configuration of the third tab body 350 and the connection member 330, which is different from that of the secondary battery according to previously described embodiments of the present disclosure, will be described.

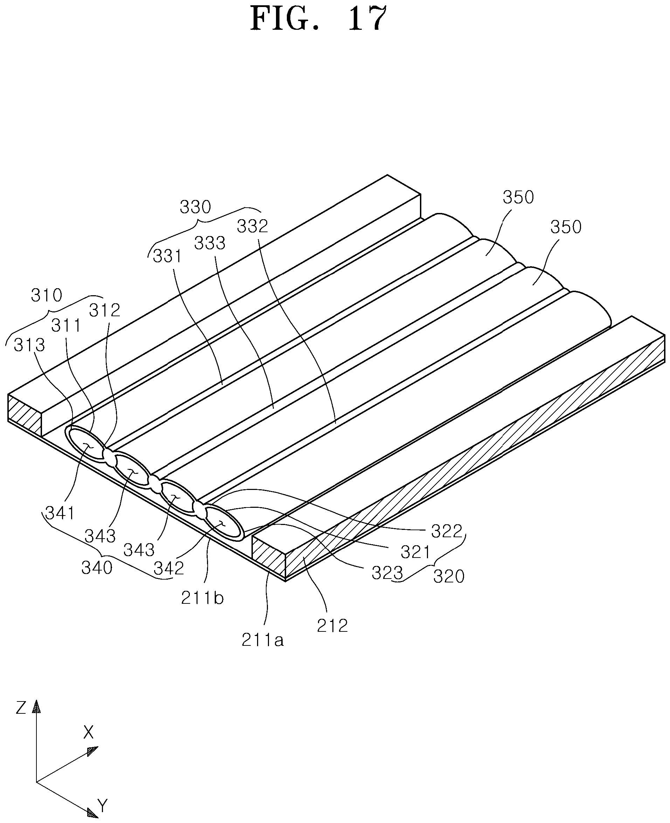

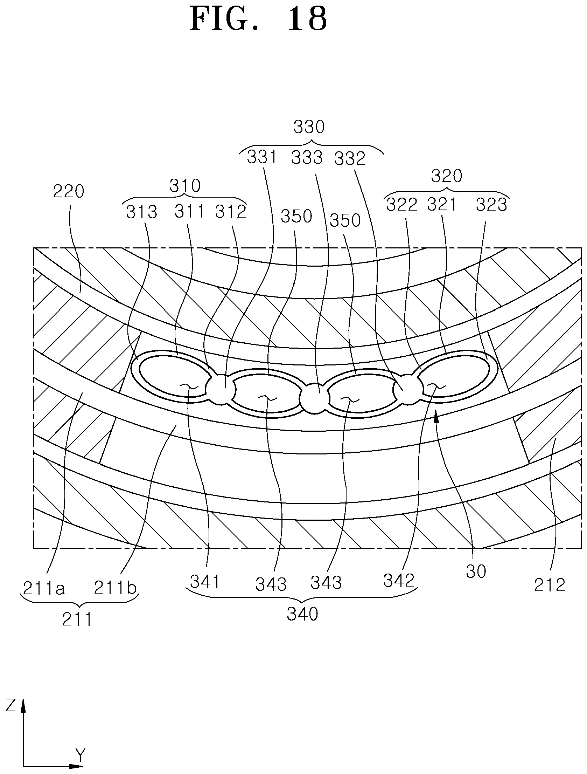

FIG. 17 is a perspective view schematically illustrating a configuration of an electrode tab according to one or more embodiments of the present disclosure, and FIG. 18 is a cross-sectional view schematically illustrating a configuration of the electrode tab of FIG. 17, according to one or more embodiments of the present disclosure.

Referring to FIGS. 17 and 18, the third tab body 350 according to one or more embodiments may be provided as a plurality of third tab bodies 350.

A longitudinal direction of each of the plurality of third tab bodies 350 may be arranged parallel (substantially parallel) to the longitudinal direction of each of the first tab body 310 and the second tab body 320. The plurality of third tab bodies 350 may be arranged at set or predetermined intervals in the width direction of the first tab body 310 between the first tab body 310 and the second tab body 320.

The first connection member 331 may be arranged between one of the plurality of third tab bodies 350, which faces the first tab body 310, and the first tab body 310. In one or more embodiments, the second connection member 332 may be arranged between another one of the plurality of third tab bodies 350, which faces the second tab body 320, and the second tab body 320.

The connection member 330 may further include a third connection member 333.

The third connection member 333 may be arranged between the adjacent third tab bodies 350. Hereinafter, the case in which the third connection member 333 is formed as a single piece as two third tab bodies 350 are formed as shown in FIGS. 17 and 18 will be described as an example. However, if I*(e.g.,* when) three or more third tab bodies 350 are formed, a plurality of third connection members 333 may be formed, and each of the third connection members 333 may be individually arranged between a pair of adjacent third tab bodies 350.

The third connection member 333 may be formed to have a band or strip shape that extends continuously in the longitudinal direction of the third tab body 350. The third connection member 333 may be arranged between end parts of the pair of third tab bodies 350 arranged adjacent to each other. One side of the third connection member 333 may be integrally connected to one end part of one of the pair of third tab bodies 350 and another side of the third connection member 333 may be integrally connected to one end part of the other of the pair of third tab bodies 350 that is adjacent to the first of the pair of the third tab bodies 350.

Hereinafter, a secondary battery according to one or more embodiments of the present disclosure will be described.

The secondary battery according to one or more embodiments may be configured to be different from the secondary battery according to one or more embodiments of the present disclosure described above only in a detailed configuration of the connection member 330. Accordingly, in describing the secondary battery according to one or more embodiments, only the detailed configuration of the connection member 330, which is different from that of the secondary battery according to previously described embodiments of the present disclosure, will be described.

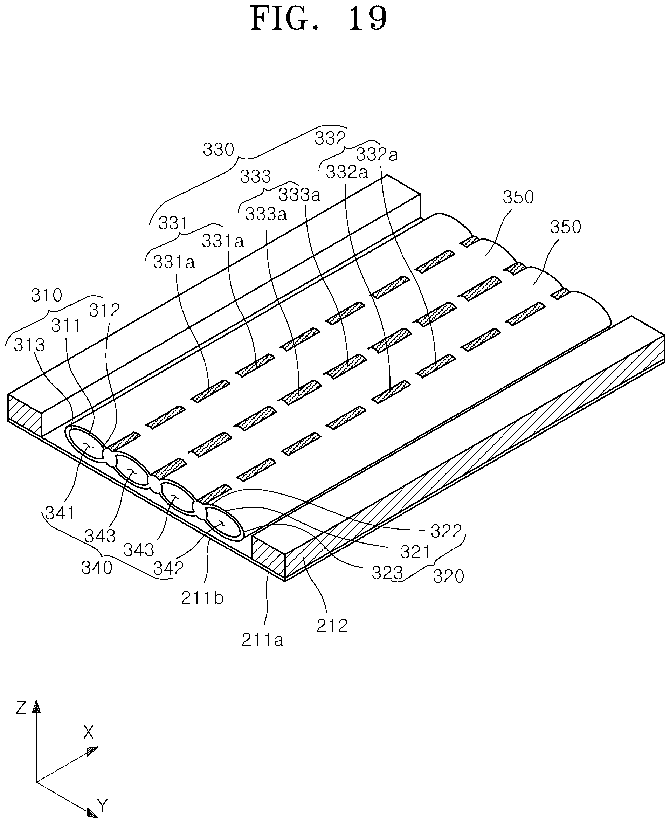

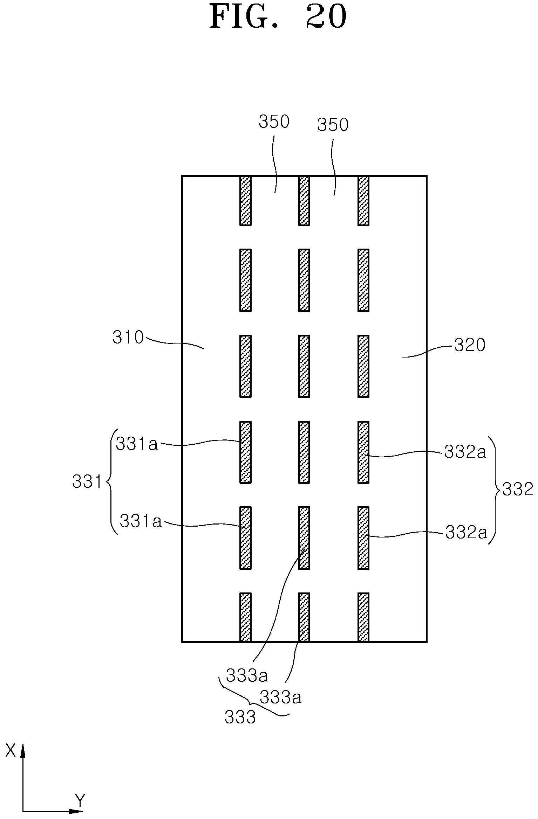

FIG. 19 is a perspective view schematically illustrating a configuration of an electrode tab according to one or more embodiments of the present disclosure, and FIG. 20 is a plan view schematically illustrating a configuration of the electrode tab of FIG. 19, according to one or more embodiments of the present disclosure.

Referring to FIGS. 19 and 20, the first connection member 331 according to tone or more embodiments may include a plurality of first connection beads 331a, the second connection member 332 may include a plurality of second connection beads 332a, and the third connection member 333 may include a plurality of third connection beads 333a.

The plurality of first connection beads 331a are arranged between the first tab body 310 and the third tab body 350, and may be arranged in a row in the longitudinal direction of each of the first tab body 310 and the third tab body 350. Intervals between adjacent first connection beads 331a may be the same, or alternatively, the intervals may be formed differently from each other.

The plurality of second connection beads 332a are arranged between the second tab body 320 and the third tab body 350, and may be arranged in a row in the longitudinal direction of each of the second tab body 320 and the third tab body 350. Intervals between adjacent second connection beads 332a may be the same, or alternatively, the intervals may be formed differently from each other.

The plurality of third connection beads 333a are arranged between the pair of third tab bodies 350 adjacent to each other, and may be arranged in a row in the longitudinal direction of the third tab body 350. Intervals between adjacent third connection beads 333a may be the same, or alternatively, the intervals may be formed differently from each other.

The case in which the first connection member 331, the second connection member 332, and the third connection member 333 are each configured to include the plurality of first connection beads 331a, the plurality of second connection beads 332a, and the plurality of third connection beads 333a has been described above as an example, but the first connection member 331, the second connection member 332, and the third connection member 333 are not limited thereto, and any one or all of the first connection member 331, the second connection member 332, and/or the third connection member 333 may be formed to have a band or strip shape that extends continuously in the longitudinal direction of the first tab body 310 as described with reference to FIGS. 17 and 18.

According to one or more embodiments of the present disclosure, if (*e.g.,* when) an electrode assembly expands, a pressure change applied between an electrode plate and a separator can be absorbed through a change in volume of the electrode tab itself, so that damage to the electrode plate can be prevented or reduced.

According to one or more embodiments of the present disclosure, a first tab body and a second tab body may be able to rotate around a connection member if (*e.g.,* when) curvature of an electrode plate changes, and thus an angle between the first tab body and the second tab body can be freely adjusted, so that, if (*e.g.,* when) an electrode assembly expands or the electrode assembly is wound, pressure applied to the electrode plate can be relieved and a crack phenomenon of the electrode plate can be prevented or reduced.

According to one or more embodiments of the present disclosure, surfaces of a first outer end part and a second outer end part have curved shapes curved with a set or predetermined curvature, so that, if I*(e.g.,* when) an electrode assembly expands, excessive stress can be prevented or reduced from being applied to the electrode plate.

However, the effects obtainable through the present disclosure are not limited to the above effects, and other technical effects that are not mentioned will be understood by those skilled in the art from the above description of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

A portable device, vehicle, and/or the battery, *e.g.,* a battery controller, and/or any other relevant devices or components according to embodiments of the present disclosure described herein may be implemented utilizing any suitable hardware, firmware (*e.g.,* an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

## Claims

1. An electrode tab comprising:
a first tab body;
a second tab body facing the first tab body;
a connection member between the first tab body and the second tab body; and
a buffer member in at least one of the first tab body or the second tab body.

2. The electrode tab as claimed in claim 1, wherein the first tab body and the second tab body are rotatably connected about the connection member.

3. The electrode tab as claimed in claim 1 or 2,
wherein the first tab body comprises:
a first center part;
a first inner end part extending from one side of the first center part and connected to the connection member; and
a first outer end part extending from the other side of the first center part and spaced from the first inner end part, and
the second tab body comprises:
a second center part;
a second inner end part extending from one side of the second center part and connected to the connection member; and
a second outer end part extending from the other side of the second center part and spaced from the second inner end part.

4. The electrode tab as claimed in claim 3, wherein a cross-sectional area of the first tab body decreases from the first center part toward the first outer end part, and
a cross-sectional area of the second tab body decreases from the second center part toward the second outer end part.

5. The electrode tab as claimed in claim 4, wherein a surface of each of the first outer end part and the second outer end part has a curved shape.

6. The electrode tab as claimed in claim 4 or 5, wherein the cross-sectional area of the first tab body decreases from the first center part toward the first inner end part, and
the cross-sectional area of the second tab body decreases from the second center part toward the second inner end part.

7. The electrode tab as claimed in any of the preceding claims, wherein the buffer member comprises:
a first chamber inside the first tab body; and
a second chamber inside the second tab body.

8. The electrode tab as claimed in claim 7, wherein the first chamber and the second chamber are separated from each other.

9. The electrode tab as claimed in claim 7 or 8, wherein cross-sectional shapes of the first chamber and the second chamber are the same as cross-sectional shapes of the first tab body and the second tab body, respectively.

10. The electrode tab as claimed in any of claims 7 to 9, wherein the first chamber and the second chamber extend along longitudinal directions of the first tab body and the second tab body, respectively.

11. The electrode tab as claimed in any of claims 7 to 10, wherein the first chamber and the second chamber pass through the first tab body and the second tab body, respectively.

12. The electrode tab as claimed in claim 1, further comprising a third tab body between the first tab body and the second tab body,
wherein the connection member comprises:
a first connection member between the first tab body and the third tab body; and
a second connection member between the second tab body and the third tab body.

13. The electrode tab as claimed in claim 12, wherein the buffer member comprises:
a first chamber inside the first tab body;
a second chamber inside the second tab body; and
a third chamber inside the third tab body.

14. A secondary battery comprising:
a case;
an electrode assembly in which an electrode plate and a separator are alternately stacked, the electrode assembly being inside the case; and
an electrode tab connected to the electrode plate,
wherein the electrode tab comprises an electrode tab according to any one of the preceding claims.

15. The secondary battery as claimed in claim 14, wherein the electrode assembly is wound around a winding axis, and
a longitudinal direction of each of the first tab body and the second tab body is substantially parallel to the winding axis.
